(19) **Europäisches Patentamt / European Patent Office / Office européen des brevets**

(11) **EP 1 779 322 B1**

(12) **EUROPEAN PATENT SPECIFICATION**

(45) Date of publication and mention of the grant of the patent:
**09.01.2008 Bulletin 2008/02**

(51) Int Cl.:
**G06T 5/00** (2006.01)

(21) Application number: **05806351.2**

(22) Date of filing: **11.10.2005**

(86) International application number:
**PCT/EP2005/011011**

(87) International publication number:
**WO 2006/050782 (18.05.2006 Gazette 2006/20)**

(54) **A DIGITAL IMAGE ACQUISITION SYSTEM HAVING MEANS FOR DETERMINING A CAMERA MOTION BLUR FUNCTION**

DIGITALES BILDERFASSUNGSSYSTEM MIT MITTELN ZUR BESTIMMUNG DER KAMERABEWEGUNGSUNSCHÄRFEFUNKTION

SYSTEME D'ACQUISITION D'IMAGES NUMERIQUES POSSEDANT UN ORGANE PERMETTANT DE DETERMINER UNE FONCTION DE FLOU DU MOUVEMENT D'APPAREIL PHOTO

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.11.2004 US 985657**
**10.11.2004 US 985650**
**10.11.2004 US 986562**

(43) Date of publication of application:
**02.05.2007 Bulletin 2007/18**

(73) Proprietor: **Fotonation Vision Limited Dangan, Galway (IE)**

(72) Inventors:
• **STEINBERG, Eran**
**San Francisco, CA 94127 (US)**
• **CORCORAN, Peter**
**Galway (IE)**
• **PRILUTSKY, Yury**
**San Mateo, CA 94404 (US)**

(74) Representative: **Boyce, Conor et al**
**F. R. Kelly & Co.,**
**27 Clyde Road,**
**Ballsbridge**
**Dublin 4 (IE)**

(56) References cited:
**WO-A-20/04001667          US-A1- 2004 218 057**

• **TRUSSELL H J ET AL: "Identification and restoration of spatially variant motion blurs in sequential images" IEEE TRANSACTIONS ON IMAGE PROCESSING USA, vol. 1, no. 1, January 1992 (1992-01), pages 123-126, XP002375828 ISSN: 1057-7149**
• **RAV-ACHA A ET AL: "Restoration of multiple images with motion blur in different directions" PROCEEDINGS FIFTH IEEE WORKSHOP ON APPLICATIONS OF COMPUTER VISION IEEE COMPUT. SOC LOS ALAMITOS, CA, USA, 2000, pages 22-28, XP002375829 ISBN: 0-7695-0813-8**
• **BEN-EZRA M ET AL: "MOTION-BASED MOTION DEBLURRING" IEEE TRANSACTIONS ON PATTERN ANALYSIS AND MACHINE INTELLIGENCE, IEEE SERVICE CENTER, LOS ALAMITOS, CA, US, vol. 26, no. 6, June 2004 (2004-06), pages 689-698, XP001211158 ISSN: 0162-8828**

**Description**

FIELD OF THE INVENTION

This invention relates to a digital image acquisition system comprising a digital processing component for determining a camera motion blur function in a captured digital image.

BACKGROUND TO THE INVENTION

Camera motion is dependent on a few parameters. First of all, the exposure speed. The longer the shutter is open, the more likely that movement will be noticed. The second is the focal length of the camera. The longer the lens is, the more noticeable the movement is. A rule of thumb for amateur photographers shooting 35mm film is never to exceed the exposure time beyond the focal length, so that for a 30mm lens, not to shoot slower than 1/30th of a second. The third criteria is the subject itself. Flat areas, or low frequency data, is less likely to be degraded as much as high frequency data.

Historically, the problem was addressed by anchoring the camera, such as with the use of a tripod or monopod, or stabilizing it such as with the use of gyroscopic stabilizers in the lens or camera body, or movement of the sensor plane to counteract the camera movement.

Mathematically, the motion blurring can be explained as applying a Point Spread Function, or PSF, to each point in the object. This PSF represent the path of the camera, during the exposure integration time. Motion PSF is a function of the motion path and the motion speed, which determines the integration time, or the accumulated energy for each point.

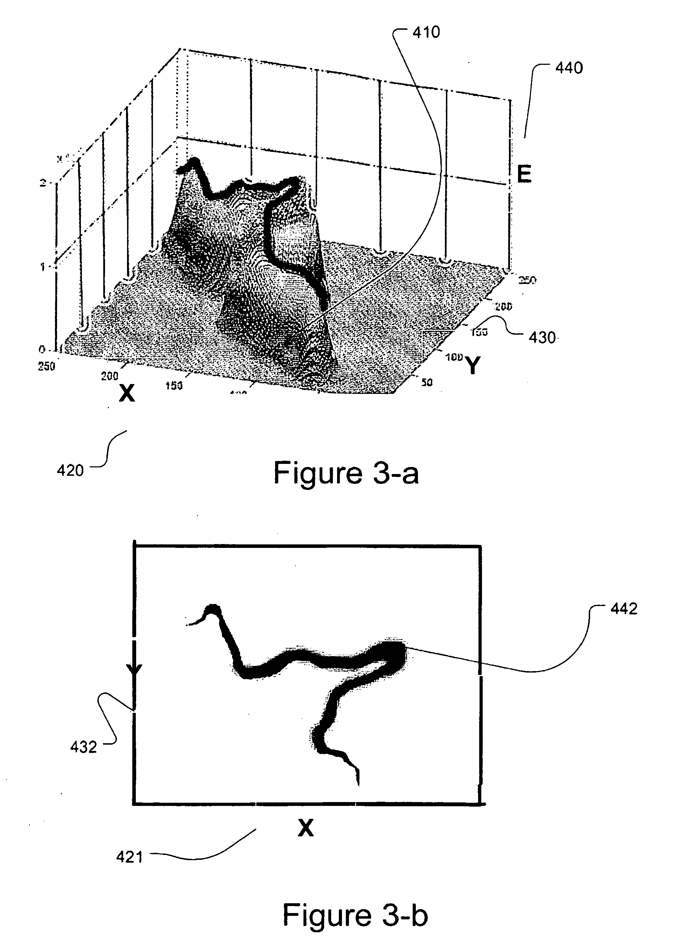

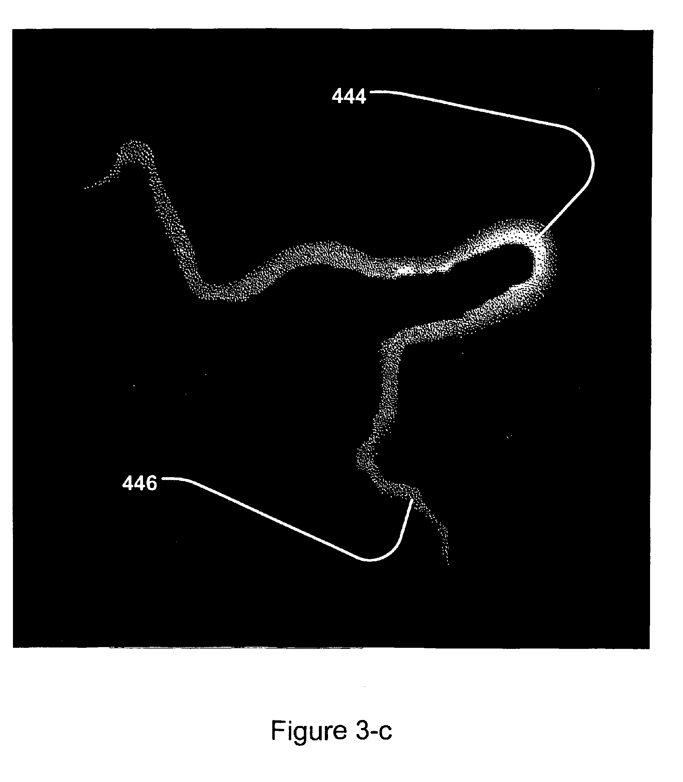

A hypothetical example of such a PSF is illustrated in Figure 3-a and 3-b. Figure 3-b is a projection of Figure 3-a. In Figures 3-a and 3-b, the PSF is depicted by 410 and 442 respectively. The pixel displacement in x and y directions are depicted by blocks 420 and 421 respectively for the X axis and 430 and 432 for the Y axis respectively. The energy 440 is the third dimension of Figure 3-a. Note that the energy is the inverse of the differential speed in each point, or directly proportional to the time in each point. In other words, the longer the camera is stationary at a given location, the longer the integration time is, and thus the higher the energy packed. This may also be depicted as the width of the curve 442 in a X-Y projection.

Visually, when referring to images, in a simplified manner, Figure 3-c illustrates what would happen to a pinpoint white point in an image blurred by the PSF of the aforementioned Figures. In a picture, such point of light surrounded by black background will result in an image similar to the one of Figure 3-c. In such image, the regions that the camera was stationary longer, such as 444 will be brighter than the region where the camera was stationary only a fraction of that time. Thus such image may provide a visual speedometer, or visual accelerometer. Moreover, in a synthetic photographic environment such knowledge of a single point, also referred to as a delta-function could define the PSF.

Given:

a two dimensional image I represented by I(x,y)
a motion point spread function MPSF(I)

The degraded image I'(x,y) can be mathematically defined as the convolution of I(X,Y) and MPSF(x,y) or

$$I'(x, y) = I(x, y) \otimes MPSF(x, y) \quad \text{(Eq. 1)}$$

or in the integral form for a continuous function

$$I(x, y) = \iint (I(x - x', y - y') MPSF(x' \, y') \partial x' \partial y' \quad \text{(Eq. 2)}$$

and for a discrete function such as digitized images:

$$I'(m,n) = \sum_j \sum_k I(m-j, n-k) MPSF(j,k)$$

(Eq. 3)

Another well known PSF in photography and in optics in general is blurring created by de-focusing. The difference is that de-focusing can usually be depicted by a symmetrical Gaussian shift invariant PSF, while motion de-blurring is not.

The reason why motion de-blurring is not shift invariant is that the image may not only shift but also rotate. Therefore, a complete description of the motion blurring is an Affine transform that combines shift and rotation based on the following transformation:

$$\begin{bmatrix} u \\ v \\ 1 \end{bmatrix} = \begin{bmatrix} Cos\omega & Sin\omega & \Delta x \\ -Sin\omega & \cos\omega & \Delta y \\ 0 & 0 & 1 \end{bmatrix}$$

(Eq. 4)

The PSF can be obtained empirically as part of a more generic field such as system identification. For linear systems, the PSF can be determined by obtaining the system's response to a known input and then solving the associated inversion problems.

The known input can be for an optical system, a point, also mathematically defined in the continuous world as a delta function $\delta(x)$, a line, an edge or a corner.

An example of a PSF can be found in many text books such as "Deconvolution of Images and Spectra" 2nd. Edition, Academic Press, 1997, edited by Jannson, Peter A. and "Digital Image Restoration", Prentice Hall,1977 authored by Andrews, H.C. and Hunt, B.R.

The process of de-blurring an image is done using de-convolution which is the mathematical form of separating between the convolve image and the convolution kernel. However, as discussed in many publications such as Chapter 1 of "Deconvolution of Images and Spectra" 2nd. Edition, Academic Press, 1997, edited by Jannson, Peter A., the problem of de-convolution can be either unsolvable, ill-posed or ill-conditioned. Moreover, for a physical real life system, an attempt to find a solution may also be exacerbated in the presence of noise or sampling.

One may mathematically try and perform the restoration via de-convolution means without the knowledge of the kernel or in this case the PSF. Such methods known also as blind de-convolution. The results of such process with no a-priori knowledge of the PSF for a general optical system are far from acceptable and require extensive computation. Solutions based on blind de-convolution may be found for specific circumstances as described in "Automatic multidimensional deconvolution" J. Opt. Soc. Am. A, vol. 4(1), pp. 180-188, Jan. 1987 to Lane et al, "Some Implications of Zero Sheets for Blind Deconvolution and Phase Retrieval", J. Optical Soc. Am. A,vol. 7, pp. 468-479, 1990 to Bates et al, Iterative blind deconvolution algorithm applied to phase retrieval", J. Opt. Soc. Am. A,vol. 7(3), pp. 428-433, Mar. 1990. to Seldin et al and "Deconvolution and Phase Retrieval With Use of Zero Sheets," J. Optical Soc. Am. A,vol. 12, pp. 1,842-1,857, 1995 to Bones et al. However, as known to those familiar in the art of image restoration, and as explained in "Digital Image Restoration", Prentice Hall,1977 authored by Andrews, H.C. and Hunt, B.R., blurred images can be substantially better restored when the blur function is known.

The article "Motion Deblurring Using Hybrid Imaging", by Moshe Ben-Ezra and Shree K. Nayar, from the Proceedings IEEE Computer Society Conference on Computer Vision and Pattern Recognition, 2003, determines the PSF of a blurred image by using a hybrid camera which takes a number of relatively sharp reference images during the exposure period of the main image. However, this requires a special construction of camera and also requires simultaneous capture of images. Thus this technique is not readily transferable to cheap, mass-market digital cameras.

It is an object of the invention to provide an improved technique for determining a camera motion blur function in a captured digital image which can take advantage of existing camera functionality and does not therefore require special measurement hardware (although the use of the invention in special or non-standard cameras is not ruled out).

SUMMARY OF THE INVENTION

According to the present invention there is provided a portable stills camera comprising means for capturing and storing a main, high resolution digital image and for capturing, temporarily storing and displaying a succession preview images, i.e. of low resolution digital images at least in a period leading up to but not including the capture of the main image to assist the user in composing the main image, the camera further including a digital processing component for determining a camera motion blur function in a captured main digital image based on a comparison of said low resolution digital images of nominally the same scene.

In one embodiment the digital processing component identifies at least one characteristic in a single reference image which is relatively less blurred than the corresponding feature in the captured image, and calculates a point spread function (PSF) in respect of said characteristic.

In another embodiment the digital processing component calculates a trajectory of at least one characteristic in a plurality of reference images, extrapolates such characteristic on to the captured image, and calculates a PSF in respect of said characteristic.

In either case, based on the calculated PSF, the captured image can be de-convolved using de-convolution techniques known in the art.

BRIEF DESCRIPTION OF THE DRAWINGS

Embodiments of the invention will now be described, by way of example, with reference to the accompanying drawings, in which:

FIG. 1 is a block diagram of a camera apparatus operating in accordance with an embodiment of the present invention.
FIG. 2 illustrates the workflow of the initial stage of a camera motion blur reducing means using preview data according to embodiments of the invention.
FIGS. 3-a to 3-c illustrate an example of a point spread function (PSF).
FIG. 4 is a workflow illustrating a first embodiment of the invention.
FIG. 5 is a workflow illustrating a second embodiment of the invention.
FIGS. 6 and 7 are diagrams which assist in the understanding of the second embodiment.

DESCRIPTION OF A PREFERRED EMBODIMENT

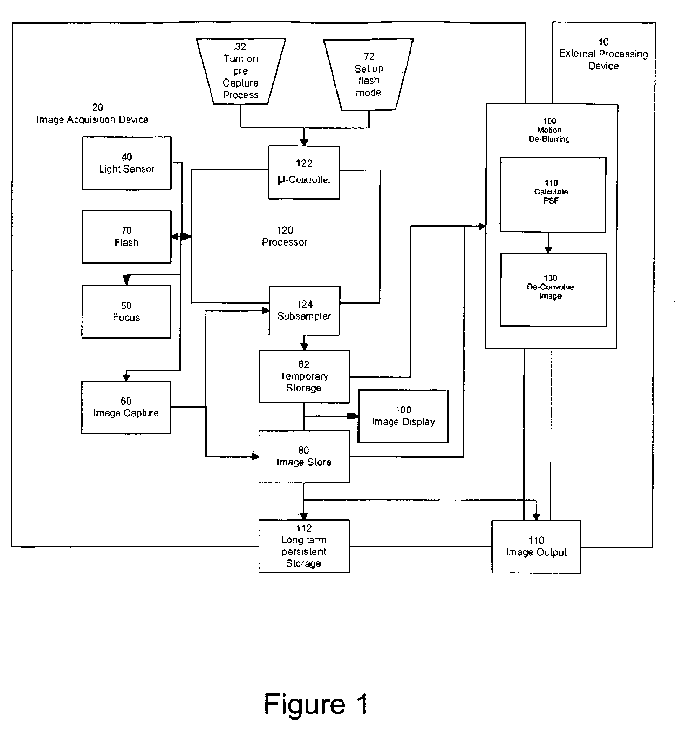

Figure 1 shows a block diagram of a digital camera apparatus operating in accordance with the present invention. The portable digital camera 20, includes a processor 120. It can be appreciated that many of the processes implemented in the digital camera may be implemented in or controlled by software operating in a microprocessor ($\mu$Proc), central processing unit (CPU), controller, digital signal processor (DSP) and/or an application specific integrated circuit (ASIC), collectively depicted as block 120 and termed as "processor". Generically, all user interface and control of peripheral components such as buttons and display is controlled by a $\mu$-controller 122.

The processor 120, in response to a user input at 122, such as half pressing a shutter button (pre-capture mode 32), initiates and controls the digital photographic process. Ambient light exposure is determined using light sensor 40 in order to automatically determine if a flash is to be used. The distance to the subject is determined using focusing means 50 which also focuses the image on image capture means 60. If a flash is to be used, processor 120 causes the flash means 70 to generate a photographic flash in substantial coincidence with the recording of the image by image capture means 60 upon full depression of the shutter button. The image capture means 60 digitally records the image in colour. The image capture means is known to those familiar with the art and may include a CCD (charge coupled device) or CMOS to facilitate digital recording. The flash may be selectively generated either in response to the light sensor 40 or a manual input 72 from the user of the camera.

The image recorded by image capture means 60 is stored in image store means 80 which may comprise computer memory such a dynamic random access memory or a nonvolatile memory. The camera is equipped with a display 100, such as an LCD at the back of the camera or a microdisplay inside the viewfinder, for preview and post-view of images. In the case of preview images, which are generated in the pre-capture mode 32, the display 100 can assist the user in composing the image, as well as being used to determine focusing and exposure. A temporary storage space 82 is used to store one or plurality of the preview images and be part of the image store means 80 or a separate component. The preview image is usually generated by the same image capture means 60, and for speed and memory efficiency reasons may be generated by subsampling the image 124 using software which can be part of the general processor 120 or dedicated hardware, before displaying 100 or storing 82 the preview image.

Upon full depression of the shutter button, a full resolution image is acquired and stored, 80. The image may go through image processing stages such as conversion from the RAW sensor pattern to RGB, format, color correction and image enhancements. These operations may be performed as part of the main processor 120 or by using a secondary processor such as a dedicated DSP. Upon completion of the image processing the images are stored in a long term persistent storage such as a removable storage device 112.

According to this embodiment, the system includes a motion de-blurring component 100. This component can be implemented as firmware or software running on the main processor 120 or on a separate processor. Alternatively, this component may be implemented in software running on an external processing device 10, such as a desktop or a server, which receives the images from the camera storage 112 via the image output mechanism 110, which can be physical removable storage, wireless or tethered connection between the camera and the external device. The motion de-blurring component 100 includes a PSF calculator 110 and an image de-convolver 130 which de-convolves the full resolution image using the PSF. These two components may be combined or treated separately. The PSF calculator 110 may be used for qualification only, such as determining if motion blur exists, while the image de-convolver 130 may be activated only after the PSF calculator 110 has determined if deblurring is needed.

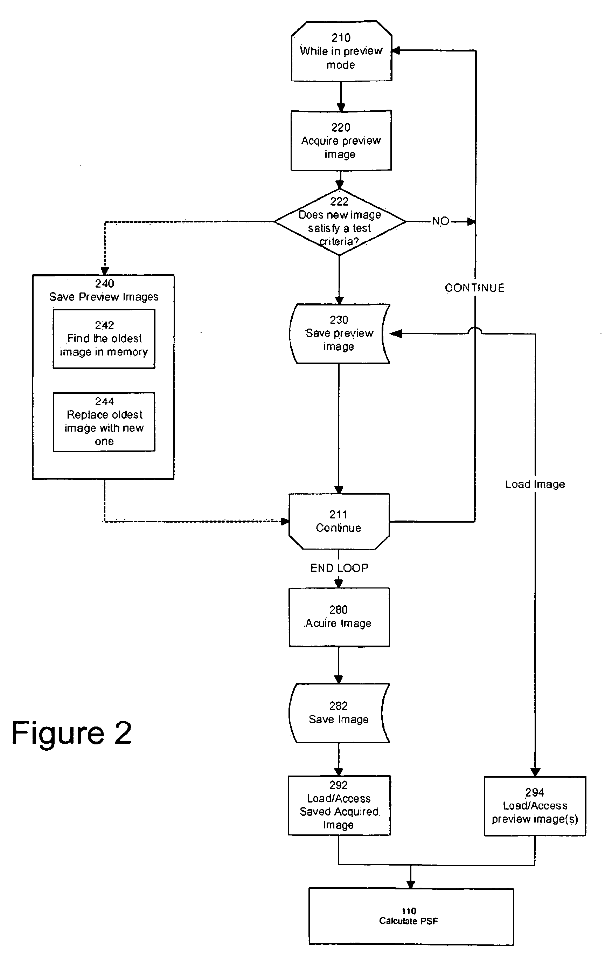

Figure 2 is a flow chart of one embodiment of calculating the PSF in accordance with the present invention. While the camera is in preview mode, 210, the camera continuously acquires preview images, calculating exposure and focus and displaying the composition. When such an image satisfies some predefined criteria 222, the preview image is saved, 230. As explained below, such criteria will be defined based on image quality and/or chronological considerations. A simple criteria may be always save the last image. More advanced image quality criteria may include analysis as to whether the preview image itself has too much motion blurring. As an alternative to saving a single image, multiple images may be saved, 240, the newest preview image being added to the list, replacing the oldest one, 242 and 244. The definition of oldest can be chronological, as in First In First Out. Alternatively it can be the image that least satisfies criteria as defined in stage 222. The process continues, 211, until the shutter release is fully pressed, 280, or the camera is turned off.

The criteria, 222, that a preview image needs to satisfy can vary depending on specific implementations of the algorithm. In one preferred embodiment, such criteria may be whether the image is not blurred. This is based on the assumption that even if a camera is constantly moving, being hand held by the user, there are times where the movement is zero, whether because the user is firmly holding the camera or due to change of movement direction the movement speed is zero at a certain instance. Such criteria may not need to be absolute. In addition such criteria may be based on one or more 1-dimensional vectors as opposed to the full two dimensional image. In other words, the criteria 222 may be satisfied if the image is blurred horizontally, but no vertical movement is recorded and vice versa, due to the fact that the motion may be mathematically orthogonal, thus separable. More straight forward criteria will be chronological, saving images every predefined time which can be equal or slower to the speed the preview images are generated. Other criteria may be defined such as related to the exposure, whether the preview reached focus, whether flash is being used, etc.

Finally, the full resolution image acquired at 280 is saved, 282.

After the full resolution image is saved, 282, it is loaded into memory 292 and the preview image or images are loaded into memory as well, 294. Together the preview and final images are the input of the process which calculates the PSF, 110.

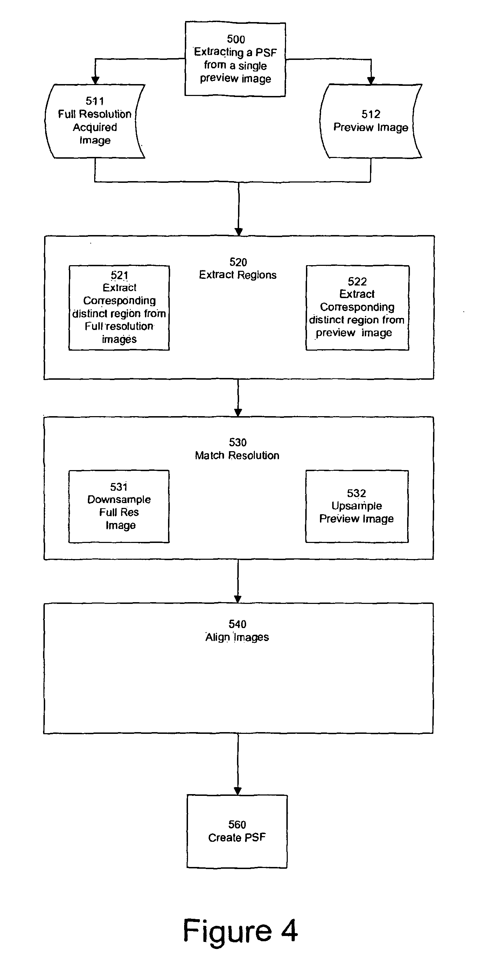

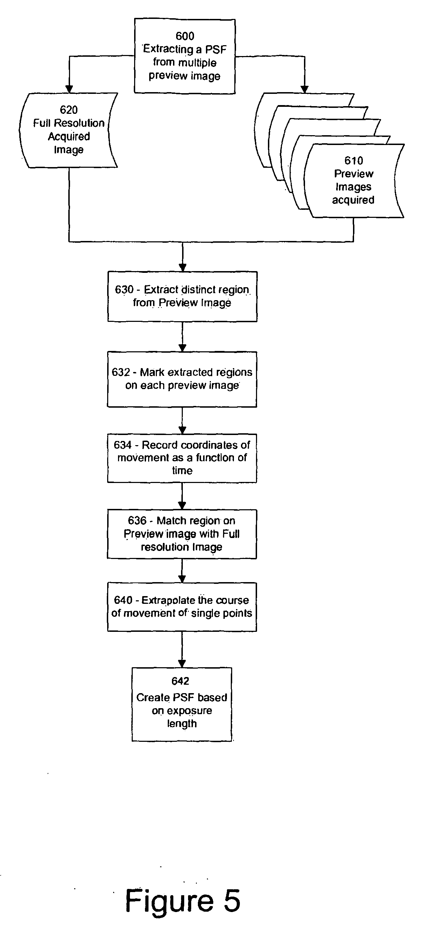

A description of two different methods of calculating the PSF are illustrated in Figures 4 and 5.

Figure 4 shows an embodiment 500 for extracting a PSF using a single preview image.

In this embodiment, the input is the finally acquired full resolution image 511, and a saved preview image 512. Prior to creating the PSF, the preview and final image have to be aligned. The alignment can be a global operation, using the entire images, 511 and 512. However, the two images may not be exact for several reasons.

Due to the fact that the preview image and the final full resolution image differ temporally, there may not be a perfect alignment. In this case, local alignment, based on image features and using techniques known to those skilled in the art, will normally be sufficient. The process of alignment may be performed on selected extracted regions 520, or as a local operation. Moreover, this alignment is only required in the neighborhood of the selected region(s) or feature (s) used for the creation of the PSF. In this case, matching regions of the full resolution and preview image are extracted, 521 and 522. The process of extraction of such regions may be as simple as separating the image into a grid, which can be the entire image, or fine resolution regions. Other more advanced schemes will include the detection of distinct regions of interest based on a classification process, such as detecting regions with high contrast in color or exposure, sharp edges or other distinctive classifiers that will assist in isolating the PSF. One familiar in the art is aware of many algorithms for analyzing and determining local features or regions of high contrast; frequency transform and edge detection techniques are two specific examples that may be employed for this step, which may further include segmentation, feature extraction and classification steps.

The preview image 512 is normally, but not necessarily, of lower resolution than the full resolution image 511, typically being generated by clocking out a subset of the sensor cells or by averaging the raw sensor data. Therefore, the two images, or alternatively the selected regions in the images, need to be matched in pixel resolution, 530. In the present context "pixel resolution" means the size of the image, or relevant region, in terms of the number of pixels constituting the image or region concerned. Such a process may be done by either upsampling the preview image, 532, downsampling the acquired image, 531, or a combination thereof. Those familiar in the art will be aware of several techniques best used for such sampling methods.

Now we recall from before that:

A two dimensional image I is given as I(x,y).

A motion point spread function describing the blurring of image I is given as MPSF(I).

The degraded image I'(x,y) can be mathematically defined as the convolution of I(x,y) and MPSF(x,y) or

$$I'(x, y) = I(x, y) \otimes MPSF(x, y) \quad \text{(Eq. 1)}$$

Now it is well known that where a mathematical function, such as the aforementioned MPSF(x,y), is convoluted with a Dirac delta function $\delta(x,y)$ that the original function is preserved. Thus, if within a preview image a sharp point against a homogenous background can be determined, it is equivalent to a local occurrence of a 2D Dirac delta function within the unblurred preview image. If this can now be matched and aligned locally with the main, blurred image $I'(x,y)$ then the distortion pattern around this sharp point will be a very close approximation to the exact PSF which caused the blurring of the original image I(x,y). Thus, upon performing the alignment and resolution matching between preview and main images the distortion patterns surrounding distinct points or high contrast image features, are, in effect, representations of the 2D PSF, for points and representation of a single dimension of the PSF for sharp, unidirectional lines.

The PSF may be created by combining multiple regions. In the simple case, a distinguished singular point on the preview image and its corresponding motion blurred form of this point which is found in the main full-resolution image is the PSF.

However, as it may not always be possible to determine, match and align, a single distinct point in both preview and full resolution image, it is alternatively possible to create a PSF from a combination of the orthogonal parts of more complex features such as edges and lines. Extrapolation to multiple 1-D edges and corners should be clear for one familiar in the art. In this case multiple line-spread-functions, depicting the blur of orthogonal lines need to be combined and analysed mathematically in order to determine a single-point PSF.

Due to statistical variances this process may not be exact enough to distinguish the PSF based on a single region. Therefore, depending on the processing power and required accuracy of the PSF, the step of finding the PSF may include some statistical pattern matching or statistical combination of results from multiple regions within an image to create higher pixel and potentially sub pixel accuracy for the PSF.

As explained above, the PSF may not be shift invariant. Therefore, the process of determining the right PSF may be performed in various regions of the image, to determine the variability of the PSF as a function of location within the image.

Figure 5 shows a method 600 of extrapolating a PSF using multiple preview images.

In this embodiment, the movement of the image is extrapolated based on the movement of the preview images. According to Figure 5, the input for this stage is multiple captured preview images 610, and the full resolution image 620. All images are recorded with an exact time stamp associated with them to ensure the correct tracking. In most cases, preview images will be equally separated, in a manner of several images per second. However, this is not a requirement for this embodiment as long as the interval between images, including the final full resolution image, is known.

One or more distinctive regions in a preview image are selected, 630. By distinctive, one refers to a region that can be isolated from the background, such as regions with noticeable difference in contrast or brightness. Techniques for identifying such regions are well known in the art and may include segmentation, feature extraction and classification.

Each region is next matched with the corresponding region in each preview image, 632. In some cases not all regions may be accurately determined on all preview images, due to motion blurring or object obscurations, or the fact that they have moved outside the field of the preview image. The coordinates of each region is recorded, 634, for the preview images and, 636, for the final image.

Knowing the time intervals of the preview images, one can extrapolate the movement of the camera as a function of time. When the full resolution image 620 is acquired, the parameter that needs to be recorded is the time interval between the last captured preview image and the full resolution image, as well as the duration of the exposure of the full resolution image. Based on the tracking before the image was captured, 634, and the interval before and duration of the final image, the movement of single points or high contrast image features can be extrapolated, 640, to determine the detailed motion path of the camera.

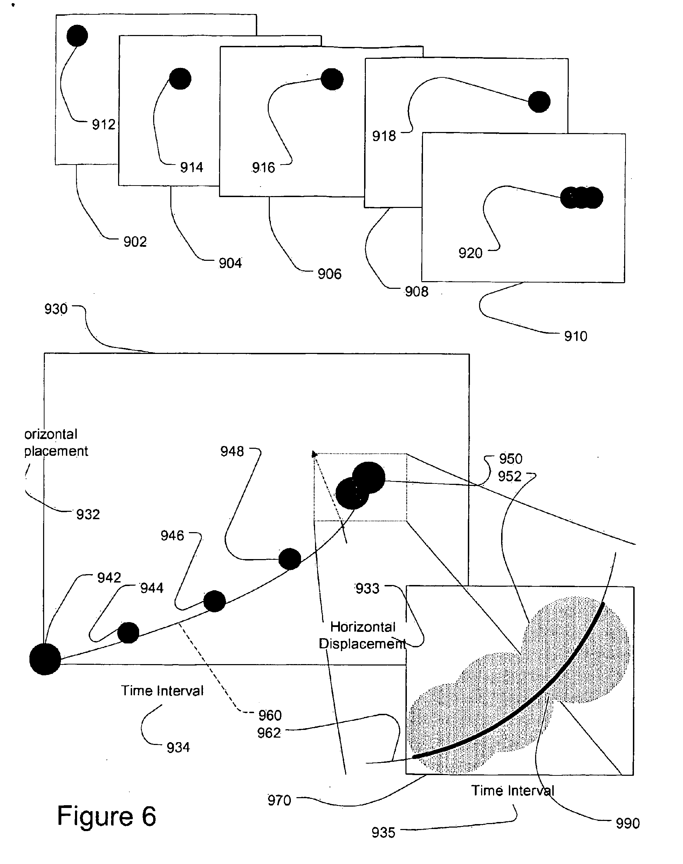

This process is illustrated in Figure 6. According to this figure multiple preview images 902, 904, 906, 908 are captured. In each of them a specific region 912, 914, 916, 918 is isolated which corresponds to the same feature in each image. The full resolution image is 910, and in it the region corresponding to 912, 914, 916, 918 is marked as 920. Note that 920 may be distorted due to motion blurring.

Tracking one dimension as a function of time, the same regions are illustrated in 930 where the regions are plotted based on their displacement 932, as a function of time interval 932. The objects 942, 944, 946 948 and 950 correspond to the regions 912, 914, 916, 918 and 920.

The motion is calculated as the line 960. This can be done using statistical interpolation, spline or other curve interpolation based on discrete sampling points. For the final image, due to the fact that the curve may not be possible to calculate, it may also be done via extrapolation of the original curve, 960.

The region of the final acquired image is enlarged 970 for better viewing. In this plot, the blurred object 950 is depicted as 952, and the portion of the curve 690 is shown as 962. The time interval in this case, 935 is limited to the exact length in which the exposure is being taken, and the horizontal displacement 933, is the exact horizontal blur. Based on that, the interpolated curve, 952, within the exposure time interval 935, produces an extrapolation of the motion path 990.

Now an extrapolation of the motion path may often be sufficient to yield a useful estimate of the PSF if the motion during the timeframe of the principle acquired image can be shown to have practically constant velocity and practically zero acceleration. As many cameras now incorporate sensitive gyroscopic sensors it may be feasible to determine such information and verify that a simple motion path analysis is adequate to estimate the motion blur PSF.

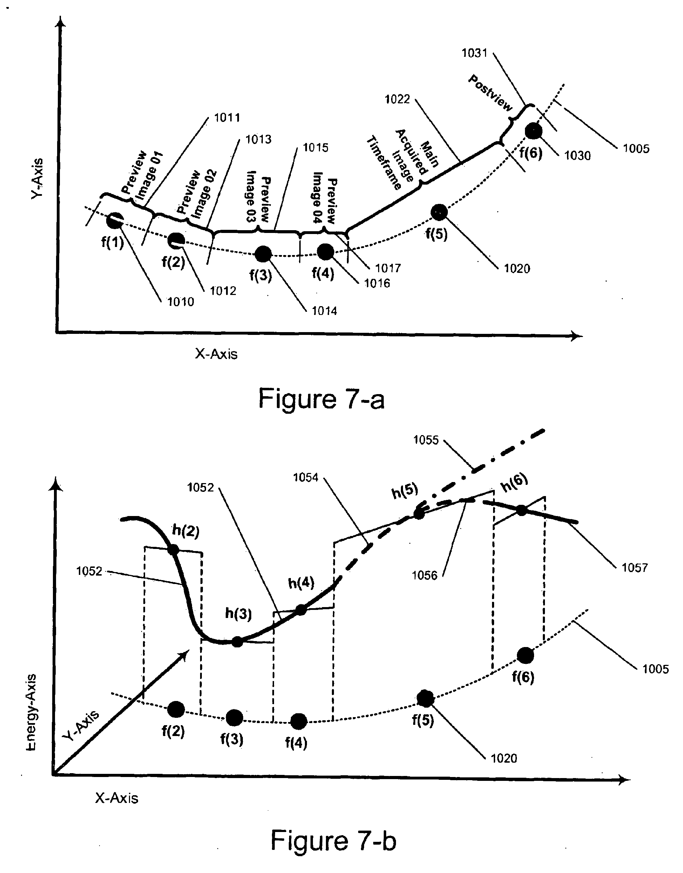

However when this is not the case (or where it is not possible to reliably make such a determination) it is still possible to estimate the detailed motion blur PSF from a knowledge of the time separation and duration of preview images and a knowledge of the motion path of the camera lens across an image scene. This process is illustrated in Figures 7-a and 7-b and will now be described in more detail.

Any PSF is an energy distribution function which can be represented by a convolution kernel $k(x,y) \to w$ where *(x,y)* is a location and w is the energy level at that location. The kernel k must satisfy the following energy conservation constraint:

$$\iint k(x,y)\, dx\, dy = 1,$$

which states that energy is neither lost nor gained by the blurring operation. In order to define additional constraints that apply to motion blur PSFs we use a time parameterization of the PSF as a path function, f(t) $\to$ (x,y)and an energy function $h(t) \to w$. Note that due to physical speed and acceleration constraints, f(t)should be continuous and at least twice differentiable, where f(t) is the velocity of the (preview) image frame and *f''(t)* is the acceleration at time t. By making the assumption that the scene radiance does not change during image acquisition, we get the additional constraint:

$$\int_t^{t+\delta t} h(t)\, dt = \frac{\delta t}{t_{end} - t_{start}},\ \delta t > 0,\ t_{start} \le t \le t_{end} - \delta t,$$

where $[t_{start},\, t_{end}]$ is the acquisition interval for a (preview) image. This constraint states that the amount of energy which is integrated at any time interval is proportional to the length of the interval.

Given these constraints we can estimate a continuous motion blur PSF from discrete motion samples as illustrated in Figures 7-a and 7-b. First we estimate the motion path, *f(t)*, by spline interpolation as previously described above and as illustrated in Figure 6. This path [1005] is further illustrated in Figure 7-a.

Now in order to estimate the energy function $h(t)$along this path we need to determine the extent of each image frame along this interpolated path. This may be achieved using the motion centroid assumption described in Ben-Ezra et al and splitting the path into frames with a 1-D Voronoi tessellation as shown in Figure 7-a. Since the assumption of constant radiance implies that frames with equal exposure times will integrate equal amounts of energy, we can compute h($t$) for each frame as shown in Figure 7-b. Note that as each preview frame will typically have the same exposure time thus each rectangle in Figure 7-b, apart from the main image acquisition rectangle will have equal areas. The area of the main image rectangle, associated with capture frame 5 [1020] in this example, will typically be several time larger than preview image frames and may be significantly more than an order of magnitude larger if the exposure time of the main image is long.

The resulting PSF determined by this process is illustrated in Figure 7-b and may be divided into several distinct parts. Firstly there is the PSF which is interpolated between the preview image frames [1052] and shown as a solid line; secondly there is the PSF interpolated between the last preview image and the midpoint of the main acquired image [1054]; thirdly there is the extrapolation of the PSF beyond the midpoint of the main acquired image [1055] which, for a main image with a long exposure time - and thus more susceptible to blurring - is more likely to deviate from the true PSF. Thus it may be desirable to acquire additional postview images, which are essentially images acquired through the same in-camera mechanism as preview images except that they are acquired after the main image has been acquired. This technique will allow a further interpolation of the main image PSF [1056] with the PSF determined from at least one postview image.

The process may not be exact enough to distinguish the PSF based on a single region. Therefore, depending on the processing power and accuracy need, the step of finding the PSF may include some statistical pattern matching of multiple regions, determining multiple motion paths, thus creating higher pixel and potentially sub pixel accuracy for the PSF.

## Claims

1. A portable digital stills camera (20) comprising means for capturing (60) and storing (80) a main, high resolution digital image and for capturing (60, 124), temporarily storing (82) and displaying (100) a succession of low resolution digital images at least in a period leading up to but not including the capture of the main image to assist the user in composing the main image, the camera further including a digital processing component (100) for determining a camera motion blur function in a captured main digital image based on a comparison of said captured main digital image and at least one of said low resolution digital images of nominally the same scene.

2. A camera according to claim 1 wherein the camera motion blur function is a point spread function (PSF).

3. A camera according to claim 1. wherein said digital processing component further de-blurs (130) the captured image using said determined camera motion blur function,

4. A camera according to claim 1, wherein said digital processing component is arranged to match (530) the pixel resolutions of the captured and reference images by at least one of up-sampling the reference image and subsampling the captured image.

5. A camera according to claim 1, wherein said digital processing component is arranged to align (540) at least portions of the captured image and reference image,

6. A camera according to claim 5, wherein the alignment is a global alignment on the entire images.

7. A camera according to claim 1, wherein said digital processing component uses the captured image and a single low resolution image.

8. A camera according to claim 7. wherein said digital processing component identifies (630) at least one characteristic of the reference image which is less blurred than the corresponding characteristic of the captured image, and calculates (642) a point spread function (PSF) in respect of said feature.

9. A camera according to claim 8, wherein said digital processing component de-convolves the captured image using the PSF.

10. A camera according to claim 1. wherein said digital processing component uses the captured image and multiple low resolution images taken at successive points in time.

11. A camera according to claim 10, wherein said digital processing component calculates (640) a trajectory of at least one characteristic in the reference images, extrapolates such characteristic on to the captured image, and calculates a point spread function (PSF) in respect of said characteristic.

12. A camera according to claim 11, wherein said digital processing component de-convolves the captured image using the PSF.

13. In a portable digital stills camera comprising means for capturing and storing a main, high resolution digital image and for capturing, temporarily storing and displaying a succession of low resolution digital images at least in a period leading up to but not including the capture of the main image to assist the user in composing the main image, a method for determining a camera motion blur function in a captured main digital image based on a comparison of said captured main digital image and at least one of said low resolution digital images of nominally the same scene.

**14.** A method according to claim 13, wherein the camera motion blur function is a point spread function.

**15.** A method according to claim 13, further including deblurring the captured image using said determined camera motion blur function.

**Patentansprüche**

**1.** Tragbare digitale Festbildkamera (20), die Mittel zum Aufnehmen (60) und Speichern (80) eines digitalen Hauptbildes mit hoher Auflösung und zum Aufnehmen (60, 124), temporären Speichern (82) und Anzeigen (100) einer Folge von digitalen Bildern mit niedriger Auflösung wenigstens in einer Periode bis zu, aber nicht einschließlich, der Aufnahme des Hauptbildes umfasst, um dem Benutzer beim Zusammensetzen des Hauptbildes zu assistieren, wobei die Kamera ferner eine digitale Verarbeitungskomponente (100) zum Bestimmen einer Kamerabewegungsunschärfefunktion in einem aufgenommenen digitalen Hauptbild auf der Basis eines Vergleichs des genannten aufgenommenen digitalen Hauptbildes mit wenigstens einem der genannten digitalen Bilder mit niedriger Auflösung der theoretisch selben Szene beinhaltet.

**2.** Kamera nach Anspruch 1, wobei die Kamerabewegungsunschärfefunktion eine Punktestreufunktion (PSF) ist.

**3.** Kamera nach Anspruch 1, wobei die genannte digitale Verarbeitungskomponente ferner die Unschärfe des aufgenommenen Bildes mit Hilfe der genannten bestimmten Kamerabewegungsunschärfefunktion beseitigt (130).

**4.** Kamera nach Anspruch 1, wobei die genannte digitale Verarbeitungskomponente die Aufgabe hat, die Pixelauflösungen des aufgenommenen Bildes und des Referenzbildes durch Upsampling des Referenzbildes und/oder Subsampling des aufgenommenen Bildes abzustimmen (530).

**5.** Kamera nach Anspruch 1, wobei die genannte digitale Verarbeitungskomponente die Aufgabe hat, wenigstens Teile des aufgenommenen Bildes und des Referenzbildes auszurichten (540).

**6.** Kamera nach Anspruch 5, wobei die Ausrichtung eine globale Ausrichtung an den gesamten Bildern ist.

**7.** Kamera nach Anspruch 1, wobei die genannte digitale Verarbeitungskomponente das aufgenommene Bild und ein einziges Bild mit niedriger Auflösung verwendet.

**8.** Kamera nach Anspruch 7, wobei die genannte digitale Verarbeitungskomponente wenigstens eine Charakteristik des Referenzbildes identifiziert (630), die weniger unscharf ist als die entsprechende Charakteristik des aufgenommenen Bildes, und eine Punktestreufunktion (PSF) in Bezug auf das genannte Merkmal berechnet (642).

**9.** Kamera nach Anspruch 8, wobei die genannte digitale Verarbeitungskomponente das aufgenommene Bild mit der PSF entfaltet.

**10.** Kamera nach Anspruch 1, wobei die genannte digitale Verarbeitungskomponente das aufgenommene Bild und mehrere Bilder mit niedriger Auflösung verwendet, die zu aufeinander folgenden Zeitpunkten aufgenommen wurden.

**11.** Kamera nach Anspruch 10, wobei die genannte digitale Verarbeitungskomponente eine Bahn von wenigstens einer Charakteristik in den Referenzbildern berechnet (640), eine solche Charakteristik auf das aufgenommene Bild extrapoliert und eine Punktestreufunktion (PSF) in Bezug auf die genannte Charakteristik berechnet.

**12.** Kamera nach Anspruch 11, wobei die genannte digitale Verarbeitungskomponente das aufgenommene Bild mit der PSF entfaltet.

**13.** Verfahren zum Bestimmen einer Kamerabewegungsunschärfefunktion in einem aufgenommenen digitalen Hauptbild auf der Basis eines Vergleichs des genannten aufgenommenen digitalen Hauptbildes mit wenigstens einem der genannten digitalen Bilder mit niedriger Auflösung der theoretisch selben Szene, in einer tragbaren digitalen Festbildkamera, die Mittel zum Aufnehmen und Speichern eines digitalen Hauptbildes mit hoher Auflösung und zum Aufnehmen, temporären Speichern und Anzeigen einer Folge von digitalen Bildern mit niedriger Auflösung wenigstens in einer Periode bis zu, aber nicht einschließlich, der Aufnahme des Hauptbildes umfasst, um dem Benutzer beim Zusammensetzen des Hauptbildes zu assistieren.

**14.** Verfahren nach Anspruch 13, wobei die Kamerabewegungsunschärfefunktion eine Punktestreufunktion ist.

**15.** Verfahren nach Anspruch 13, das ferner das Beseitigen der Unschärfe des aufgenommenen Bildes mit der genannten bestimmten Kamerabewegungsunschärfefunktion beinhaltet.

**Revendications**

**1.** Appareil photographique numérique portable (20) comprenant un moyen pour capturer (60) et mémoriser (80) une image numérique de haute résolution principale et pour capturer (60, 124), mémoriser temporairement (82) et afficher (100) une succession d'images numériques de faible résolution au moins dans une période conduisant à, mais n'incluant pas, la capture de l'image principale afin d'aider l'utilisateur à composer l'image principale, l'appareil photographique comportant en outre un composant de traitement numérique (100) pour déterminer une fonction de flou de mouvement d'appareil photographique dans une image numérique principale capturée d'après une comparaison de ladite image numérique principale capturée et d'au moins l'une desdites images numériques de faible résolution de nominalement la même scène.

**2.** Appareil photographique selon la revendication 1, dans lequel la fonction de flou de mouvement d'appareil photographique est une fonction d'étalement de points (PSF).

**3.** Appareil photographique selon la revendication 1, dans lequel ledit composant de traitement numérique en outre supprime le flou (130) de l'image capturée en utilisant ladite fonction de flou de mouvement d'appareil photographique déterminée.

**4.** Appareil photographique selon la revendication 1, dans lequel ledit composant de traitement numérique est agencé pour faire correspondre (530) les résolutions de pixels des images capturée et de référence par au moins l'un d'un sur-échantillonnage de l'image de référence et d'un sous-échantillonnage de l'image capturée.

**5.** Appareil photographique selon la revendication 1, dans lequel ledit composant de traitement numérique est agencé pour aligner (540) au moins des parties de l'image capturée et de l'image de référence.

**6.** Appareil photographique selon la revendication 5, dans lequel l'alignement est un alignement global sur toutes les images.

**7.** Appareil photographique selon la revendication 1, dans lequel ledit composant de traitement numérique utilise l'image capturée et une seule image de faible résolution.

**8.** Appareil photographique selon la revendication 7, dans lequel ledit composant de traitement numérique identifie (630) au moins une caractéristique de l'image de référence qui est moins floue que la caractéristique correspondante de l'image capturée, et calcule (642) une fonction d'étalement de points (PSF) relativement à ladite caractéristique.

**9.** Appareil photographique selon la revendication 8, dans lequel ledit composant de traitement numérique déconvolutionne l'image capturée au moyen de la PSF.

**10.** Appareil photographique selon la revendication 1, dans lequel ledit composant de traitement numérique utilise l'image capturée et les multiples images de faible résolution prises à des points successifs dans le temps.

**11.** Appareil photographique selon la revendication 10, dans lequel ledit composant de traitement numérique calcule (640) une trajectoire d'au moins une caractéristique dans les images de référence, extrapole cette caractéristique sur l'image capturée et calcule une fonction d'étalement de points (PSF) relativement à ladite caractéristique.

**12.** Appareil photographique selon la revendication 11, dans lequel ledit composant de traitement numérique déconvolutionne l'image capturée au moyen de la PSF.

**13.** Dans un appareil photographique numérique portable comprenant un moyen pour capturer et mémoriser une image numérique de haute résolution principale et pour capturer, mémoriser temporairement et afficher une succession d'images numériques de faible résolution au moins dans une période conduisant à, mais n'incluant pas, la capture de l'image principale afin d'aider l'utilisateur à composer l'image principale, procédé de détermination d'une fonction de flou de mouvement d'appareil photographique dans une image numérique principale capturée d'après une comparaison de ladite image numérique principale capturée et d'au moins l'une desdites images numériques de faible résolution de nominalement la même scène.

14. Procédé selon la revendication 13, dans lequel la fonction de flou de mouvement d'appareil photographique est une fonction d'étalement de points.

15. Procédé selon la revendication 13, comportant en outre la suppression du flou de l'image capturée en utilisant ladite fonction de flou de mouvement d'appareil photographique déterminée.

Figure 1

**210**
While in preview mode

**220**
Acquire preview image

**222**
Does new image satisfy a test criteria?

NO

CONTINUE

**240**
Save Preview Images

**242**
Find the oldest image in memory

**244**
Replace oldest image with new one

**230**
Save preview image

**211**
Continue

Load Image

END LOOP

**280**
Acuire Image

**282**
Save Image

**292**
Load/Access Saved Acquired Image

**294**
Load/Access preview image(s)

**110**
Calculate PSF

# Figure 2

Figure 3-a

Figure 3-b

Figure 3-c

Figure 4

600
Extracting a PSF
from multiple
preview image

620
Full Resolution
Acquired
Image

610
Preview
Images
acquired

630 - Extract distinct region
from Preview Image

632 - Mark extracted regions
on each preview image

634 - Record coordinates of
movement as a function of
time

636 - Match region on
Preview image with Full
resolution Image

640 - Extrapolate the course
of movement of single points

642
Create PSF based
on exposure
length

# Figure 5

Figure 6

Figure 7-a

Figure 7-b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Deconvolution of Images and Spectra. Deconvolution of Images and Spectra. Academic Press, 1997
- **ANDREWS, H.C ; HUNT, B.R.** Digital Image Restoration. Prentice Hall, 1977
- Deconvolution of Images and Spectra. Academic Press, 1997
- **LANE.** Automatic multidimensional deconvolution. *J. Opt. Soc. Am. A,* January 1987, vol. 4 (1), 180-188
- **BATES.** Some Implications of Zero Sheets for Blind Deconvolution and Phase Retrieval. *J. Optical Soc. Am. A,* 1990, vol. 7, 468-479

- **SELDIN.** Iterative blind deconvolution algorithm applied to phase retrieval. *J. Opt. Soc. Am. A,* March 1990, vol. 7 (3), 428-433
- **BONES.** Deconvolution and Phase Retrieval With Use of Zero Sheets. *J. Optical Soc. Am. A,* 1995, vol. 12, 1, 842-1857
- **MOSHE BEN-EZRA ; SHREE K. NAYAR.** Motion Deblurring Using Hybrid Imaging. *Proceedings IEEE Computer Society Conference on Computer Vision and Pattern Recognition,* 2003